# EUROPEAN PATENT APPLICATION

(11) **EP 4 447 268 A1**
(43) Date of publication of application: **16.10.2024**
(21) Application number: 23913857.1
(22) Date of filing: 02.03.2023
(51) Int. Cl.: H02K 1/16, B65G 35/00, H02K 41/02

(54) **STATOR MODULE AND CONVEYING DEVICE**

(71) Applicant: Shanghai Golytec Automation Co., Ltd., Shanghai 201100 (CN)
(72) Inventor: CHI, Feng, Shanghai 201100 (CN); GUO, Lin, Shanghai 201100 (CN); ZHOU, Jinming, Shanghai 201100 (CN)
(74) Representative: Casalonga
(86) International application number: PCT/CN2023/079424
(87) International publication number: WO 2024/178732

(57) **Abstract**

The present application discloses a stator module and a conveying device. The stator module can include a base and an armature winding. The base comprising a bottom surface and a first surface facing away from the bottom surface, the first surface includes a first sub-surface, a second sub-surface and a third sub-surface, the second sub-surface and the first sub-surface are spaced apart in a direction perpendicular to the first sub-surface, a projection of the second sub-surface on the first sub-surface is located on a periphery of the first sub-surface, and the third sub-surface is connected between the first sub-surface and the second sub-surface, so that the first sub-surface, the second sub-surface and the third sub-surface being enclosed to form a mounting groove. The armature winding is located in the mounting groove, the surface of the armature winding facing away from the bottom surface is coplanar with the second sub-surface.

## Description

### Technical Field

The present application relates to the technical field of conveying devices, in particular to a stator module and a conveying device.

### Background

A linear motor typically includes a mover and a stator. The mover is used for carrying workpieces and transporting the workpieces or moving the workpieces to different stations for processing. The mover has a permanent magnet array coupled with an armature winding, and the mover is driven to move by energizing the armature winding of the stator periodically. In the related art, the volume of the whole stator is relatively large, which needs to occupy a relatively large space in a conveying device. Therefore, how to reduce the volume of the stator is an urgent problem to be solved.

### SUMMARY OF THE INVENTION

The embodiments of the present application provide a stator module and a conveying device, which solve the problem that a stator is large in volume.

In a first aspect, an embodiment of the present application provides a stator module, which is applied to a conveying device. The stator module includes:
a base, including a bottom surface and a first surface facing away from the bottom surface, the first surface including a first sub-surface, a second sub-surface and a third sub-surface, the second sub-surface and the first sub-surface being spaced apart in a direction perpendicular to the first sub-surface, the projection of the second sub-surface on the first sub-surface being located on the periphery of the first sub-surface, the third sub-surface being connected between the first sub-surface and the second sub-surface, the first sub-surface, the second sub-surface and the third sub-surface being enclosed to form a mounting groove; and
an armature winding, located in the mounting groove, the surface of the armature winding facing away from the bottom surface is coplanar with the second sub-surface.

In some embodiments, the base includes a first side face and a second side face disposed opposite to each other in a first direction, the first direction is parallel to the second sub-surface, the first side face and the second side face are connected with two opposite sides of the first surface, and the mounting groove penetrates through the first side face and/or the second side face.

In some embodiments, the mounting groove penetrates through the first side face and the second side face, the armature winding includes a first face and a second face disposed opposite to each other in the first direction, the first face is close to the first side face and is coplanar with the first side face, and the second face is close to the second side face and is coplanar with the second side face.

In some embodiments, the first face is provided with a first splicing portion, the second face is provided with a second splicing portion, the first splicing portion is disposed on the first face in the first direction in a protruding manner, and the second splicing portion is disposed on the second face in the first direction in a protruding manner;
or, the first splicing portion is disposed on the first face in the first direction in a protruding manner, and the second splicing portion is disposed in the second face in the first direction in a concave manner;
or, the first splicing portion is disposed in the first face in the first direction in a concave manner, and the second splicing portion is disposed on the second face in the first direction in a protruding manner,
wherein the orthographic projection of the first splicing portion on a first plane is staggered with the orthographic projection of the second splicing portion on the first plane, and the first plane is perpendicular to the first direction.

In some embodiments, the first splicing portion has a first splicing face and a second splicing face disposed opposite to each other in a second direction, the second direction is perpendicular to the second sub-surface, and the first splicing face is coplanar with the first sub-surface; and
the second splicing portion has a third splicing face and a fourth splicing face disposed opposite to each other in the second direction, and the third splicing face is coplanar with the second sub-surface,
wherein the second splicing face is coplanar with the fourth splicing face, or, the second splicing face is parallel to the fourth splicing face, and the distance between the second splicing face and the fourth splicing face is 0.1 mm-10 mm.

In some embodiments, the first direction is an arc direction, and the plane where the first face is located is perpendicular to the plane where the second face is located;
or, the first direction is a linear direction.

In some embodiments, the base has a third side face and a fourth side face disposed opposite to each other in a third direction, the third direction is parallel to the second sub-surface and intersects with the first direction, the third side face and the fourth side face are connected with two opposite sides of the first surface, the third side face and the fourth side face are both connected between the first side face and the second side face, inner side walls of the mounting groove have a first groove wall and a second groove wall disposed opposite to each other in the third direction, the first groove wall is disposed close to the third side face, the second groove wall is disposed close to the fourth side face, and the distance from the first groove wall to the third side face is equal to the distance from the second groove wall to the fourth side face.

In some embodiments, the stator module further includes:
a driver, located in the mounting groove and between the armature winding and the bottom surface, and electrically connected with the armature winding.

In some embodiments, the mounting groove includes:
a first accommodating groove, in which the armature winding being located; and
a second accommodating groove, the first accommodating groove communicating with the second accommodating groove; the second accommodating groove being closer to the bottom surface than the first accommodating groove, a projection of a groove opening of the second accommodating groove on the bottom surface being located in a projection of an inner side wall of the first accommodating groove on the bottom surface; the driver being located in the second accommodating groove.

In some embodiments, the base has a heat dissipation channel, which penetrates through the base, and communicates with the second accommodating groove.

In some embodiments, the base has at least one weight reduction groove.

In some embodiments, the base has at least one socket, which communicates with the second accommodating groove and the weight reduction groove, and an external component is electrically connected with the driver through the socket.

In some embodiments, the armature winding includes at least two coil groups, each of the coil groups includes a plurality of coils, all of the coils in a same coil group extend in a same direction and are arranged in sequence in another direction intersecting the extension direction of the coils, and an angle is reserved between extension directions of the coils in every two adjacent coil groups.

In some embodiments, an acute angle between the extension directions of the coils in every two adjacent coil groups is greater than or equal to 15° and smaller than or equal to 75°.

In some embodiments, the plurality of coils in the same coil group are spaced apart, and the distance between every two adjacent coils in the same coil group is equal to the polar distance of any one of the two adjacent coils;
or, at least two adjacent coils in the same coil group are arranged to be in contact with each other.

In some embodiments, every two adjacent coil groups are disposed symmetrically along the straight line parallel to a first direction, and the first direction is parallel to the second sub-surface;
or, the coils in each of the coil groups have a first end portion and a second end portion disposed opposite to each other in an arrangement direction of at least two coil groups, the first end portions of all of the coils in the coil groups are located on one sides of the coil groups, the second end portions of all of the coils in the coil groups are located on the other sides of the coil groups, the first end portions of the coils in one coil group of every two adjacent coil groups are disposed close to the second end portions of the other coil group, the first end portion of each of the coils in one coil group is located along the first direction between the second end portions of the corresponding two adjacent coils of the other coil group, and the first direction is parallel to the second sub-surface.

In some embodiments, each of the coils in the coil groups has a first end portion and a second end portion disposed opposite to each other in an arrangement direction of the at least two coil groups, the first end portions of all of the coils in the coil groups are located on one sides of the coil groups, and the second end portions of all of the coils in the coil groups are located on the other sides of the coil groups; the first end portions of all of the coils in the same coil group are respectively located on a first straight line, and/or, the second end portions of all of the coils in the same coil group are respectively located on a second straight line.

In some embodiments, the first straight line and the second straight line are respectively parallel to a first direction, and the first direction is parallel to the second sub-surface;
or, the first straight line is parallel to the first direction, the second straight line intersects the first direction, and the first direction is parallel to the second sub-surface.

In some embodiments, part of a projection of the at least two coil groups on the bottom surface is located outside the base.

In some embodiments, the coils in at least one of the coil groups are connected with the coils in the other adjacent coil group in a one-to-one correspondence manner, so that every two connected coils in the two adjacent coil groups are combined to form a zigzag coil.

In a second aspect, an embodiment of the present application provides a conveying device. The conveying device includes:
a stator module, including a base and an armature winding, the base including a bottom surface and a first surface facing away from the bottom surface, the first surface including a first sub-surface, a second sub-surface and a third sub-surface, the second sub-surface and the first sub-surface being spaced apart in a direction perpendicular to the first sub-surface, the projection of the second sub-surface on the first sub-surface being located on the periphery of the first sub-surface, the third sub-surface being connected between the first sub-surface and the second sub-surface, the first sub-surface, the second sub-surface and the third sub-surface being enclosed to form a mounting groove; the armature winding being located in the mounting groove, the surface of the armature winding facing away from the bottom surface is coplanar with the second sub-surface;
a substrate, including a bottom plate and two guide rails connected with the bottom plate, the two guide rails both extending in a first direction and being spaced apart in a third direction, the first direction and the third direction both being respectively parallel to the second sub-surface, the third direction being perpendicular to the first direction, the two guide rails and the bottom plate being enclosed to form an accommodating cavity, the stator module being located in the accommodating cavity, the bottom surface of the base being fixedly connected with the bottom plate; and
a mover module, located on the side of the armature winding away from the bottom plate, the mover module including a carrying portion and a permanent magnet array connected with the carrying portion, the carrying portion and the two guide rails being slidably connected in the first direction, the permanent magnet array being located between the carrying portion and the armature winding, and the permanent magnet array being disposed corresponding to the armature winding.

In some embodiments, a plurality of rolling members are disposed between each of the guide rails and the carrying portion, and the plurality of rolling members are disposed in sequence in the first direction.

In some embodiments, the carrying portion includes a middle plate and two side plates connected with two opposite sides of the middle plate, the two side plates are disposed in one-to-one correspondence with the two guide rails of the substrate, and the plurality of rolling members are respectively disposed between each of the guide rails and a corresponding side plate.

In some embodiments, each of the rolling members includes a first roller, the first roller is rotatably connected with one of the corresponding side plate and the corresponding guide rail, and the first roller is in lap connection with another of the corresponding side plate and the corresponding guide rail.

In some embodiments, each of the guide rails is provided with a first limiting portion, each of the side plates is provided with a second limiting portion, and the first limiting portion of each of the guide rails is disposed corresponding to the second limiting portion of the corresponding side plate, wherein the first limiting portion is one of a limiting protrusion and a limiting groove, the second limiting portion is the other of the limiting protrusion and the limiting groove, the limiting protrusion is located in the limiting groove, and the limiting protrusion and/or the limiting groove extends in the first direction.

In some embodiments, each of the guide rails is staggered with the corresponding side plate in the third direction, an extension plate is disposed on a side, close to the corresponding side plate, of the guide rail, the side plate is rotatably connected with the first roller, and the first roller is in lap connection with the extension plate.

In some embodiments, each one of the rolling members further include second rollers, and a second roller is disposed between the side plates and corresponding guide rails in the third direction and respectively abut against the side plates and the guide rails.

In some embodiments, a lap surface, in lap connection with one of the side plate and the guide rail, of the first roller is located on a side, facing away from the bottom surface, of the first surface of the base.

In some embodiments, a carrier roller and a belt are mounted on the guide rails, or a chain and a chain wheel are mounted on the guide rails, so as to drive the mover module to move in the first direction relative to the stator module.

According to the stator module and the conveying device of the embodiments of the present application, due to the facts that the base is provided with the mounting groove and the armature winding is located in the mounting groove, compared with a method of directly mounting the armature winding outside the base, the size of the stator module may be effectively reduced, the armature winding is better protected against external damage, and the service life of the armature winding is prolonged. Meanwhile, due to arrangement of the mounting groove, positioning for mounting of the armature winding and the base is facilitated, the assembly efficiency of the armature winding and the base is improved, and maintenance and replacement of the armature winding are convenient to implement. Moreover, the surface, facing away from the bottom surface, of the armature winding is coplanar with the first surface of the base, so that the armature winding is completely accommodated in the mounting groove, which is conductive to keeping surface flatness of the stator module, and maintaining a small magnetic gap between the mover module and the armature winding and has a high magnetic utilization rate.

### Brief Description of the Drawings

For clearer descriptions of the technical solutions according to the embodiments of the present application or in the related art, drawings that are to be referred for description of the embodiments or the related art will be briefly described hereinafter. Apparently, the drawings described hereinafter merely illustrate some embodiments of the present application, and a person of ordinary skill in the art may also derive other drawings based on the drawings described herein without any creative effort.
Fig. 1 is a schematic perspective view of a first conveying device according to an embodiment of the present application.
Fig. 2 is a schematic perspective view of a first stator module according to an embodiment of the present application.
Fig. 3 is a schematic front view of the stator module shown in Fig. 2.
Fig. 4 is a schematic perspective view of a second stator module according to an embodiment of the present application.
Fig. 5 is a schematic perspective view of a third stator module according to an embodiment of the present application.
Fig. 6 is a schematic sectional view of the stator module shown in Fig. 5.
Fig. 7 is a schematic top view of a fourth stator module according to an embodiment of the present application.
Fig. 8 is a schematic top view of a fifth stator module according to an embodiment of the present application.
Fig. 9 is a first schematic structural diagram of an armature winding in a stator module according to an embodiment of the present application.
Fig. 10 is a second schematic structural diagram of an armature winding in a stator module according to an embodiment of the present application.
Fig. 11 is a third schematic structural diagram of an armature winding in a stator module according to an embodiment of the present application.
Fig. 12 is a fourth schematic structural diagram of an armature winding in a stator module according to an embodiment of the present application.
Fig. 13 is a schematic partial front view of the conveying device shown in Fig. 1.
Fig. 14 is a schematic structural diagram of a mover module in the conveying device shown in Fig. 13.
Fig. 15 is a schematic partial front view of a second conveying device according to an embodiment of the present application.
Fig. 16 is a schematic structural diagram of a mover module in the conveying device shown in Fig. 15.
Fig. 17 is a schematic partial front view of a third conveying device according to an embodiment of the present application.
Fig. 18 is a schematic structural diagram of a mover module in the conveying device shown in Fig. 17.

Reference numerals:
10; Conveying device;
100; Stator module; 110; Base; 111; Bottom surface; 112; First surface; 1121; First sub-surface; 1122; Second sub-surface; 1123; Third sub-surface; 113; Mounting groove; 1131; First groove wall; 1132; Second groove wall; 1133; First accommodating groove; 1134; Second accommodating groove; 114; First side face; 115; Second side face; 116; Third side face; 117; Fourth side face; 118; Heat dissipation channel; 119; Weight reduction groove; 1110; Collection member;
120; Armature winding; 121; First face; 122; Second face; 123; First splicing portion; 1231; First splicing face; 1232; Second splicing face; 124, Second splicing portion; 1241; Third splicing face; 1242; Fourth splicing face; 125; Coil group; 1251; First end portion; 1252; Second end portion;
130; Driver; x; First direction; y; Third direction; z; Second direction; 11; First straight line; 12; Second straight line;
200; Substrate; 210; Bottom plate; 220; Guide rail; 221; First limiting portion; 230; Accommodating cavity; 240; Bridging block;
300; Mover module; 310; Carrying portion; 311; Middle plate; 312; Side plate; 3121; Second limiting portion; 3122; Fixing groove; 320; Permanent magnet array; 330; Rolling member; 331; First roller; 332; Second roller; 3331; Clamping hook; and 340; Extension plate.

### Detailed Description of the Embodiments

In order to make the objectives, technical solutions and advantages of the present application more clear, the present application is further described in detail below with reference to the accompanying drawings and embodiments. It is to be understood that the specific embodiments described herein are merely illustrative of the present application and are not intended to limit the present application.

A linear motor typically includes a mover and a stator. The mover is used for carrying workpieces and transporting the workpieces or moving the workpieces to different stations for processing. The mover has a permanent magnet array coupled with an armature winding, and the mover is driven to move by energizing the armature winding of the stator periodically. In the related art, the volume of the whole stator is relatively large, which needs to occupy a relatively large space in a conveying device. Therefore, how to reduce the volume of the stator is an urgent problem to be solved. The embodiments of the present application provide a stator module and a conveying device, which aim to solve the above-mentioned problem.

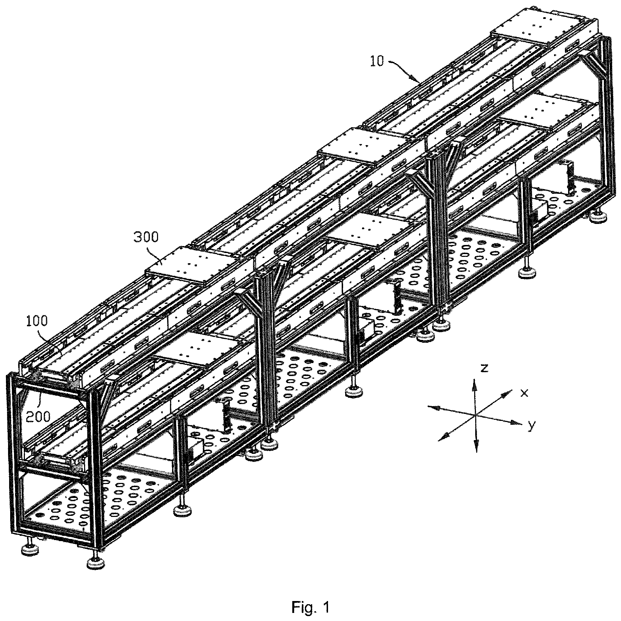

In a first aspect, referring to Fig. 1, an embodiment the present application provides a stator module 100. The stator module 100 is applied to a conveying device 10, and configured to cooperate with a mover module 300 in the conveying device 10 to achieve conveying and transportation of objects. The mover module 300 may be configured to carry objects. During use, the stator module 100 may be fixed relatively, and the mover module 300 may move relative to the stator module 100 to achieve conveying of the objects.

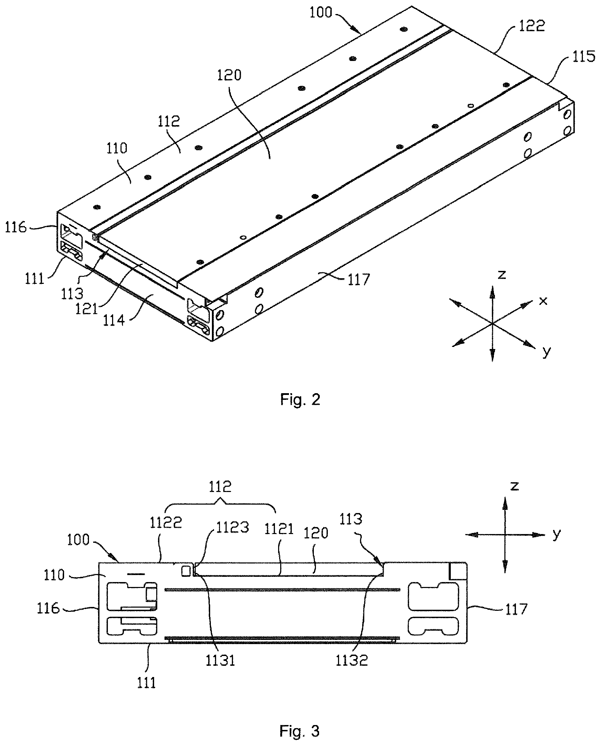

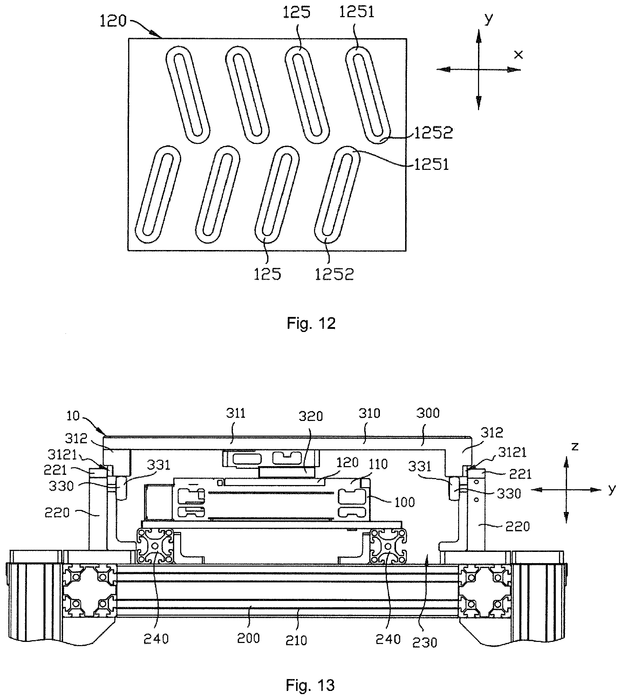

Referring to Fig. 1 and Fig. 2, the stator module 100 may include a base 110 and an armature winding 120. A plurality of coils arranged in a phase sequence are disposed in the armature winding 120, and by periodically energizing the armature winding 120, a magnetic field around the armature winding 120 is changed to achieve the purpose of driving the mover module 300 to move. For example, the mover module 300 may be provided with a permanent magnet array 320 (which may refer to Fig. 13), the permanent magnet array 320 generates a constant magnetic field around the mover module 300, a changing magnetic field may be generated around the armature winding 120 when a current direction and/or a current magnitude of the coils in the armature winding 120 is changed, and the changing magnetic field interacts with the constant magnetic field, which may drive the mover module 300 to move relative to the stator module 100. It is to be noted that the mover module 300 is not limited to achieving coordination with the stator module 100 through the permanent magnet array 320, the mover module 300 may also adopt coils to achieve the movement of the mover module 300 relative to the stator module 100 through coordination between a changing magnetic field around the mover module 300 and a changing magnetic field around the stator module 100, which is not limited.

Next, the structure of the stator module 100 will be described in detail.

Referring to Fig. 2 and Fig. 3, the base 110 has a bottom surface 111 and a first surface 112 facing away from the bottom surface 111. The first surface 112 includes a first sub-surface 1121, a second sub-surface 1122 and a third sub-surface 1123. The second sub-surface 1122 and the first sub-surface 1121 are spaced apart in a direction perpendicular to the first sub-surface 1121, and a projection of the second sub-surface 1122 on the first sub-surface 1121 is located on a periphery of the first sub-surface 1121. The third sub-surface 1123 is connected between the first sub-surface 1121 and the second sub-surface 1122, so that the first sub-surface 1121, the second sub-surface 1122 and the third sub-surface 1123 being enclosed to form a mounting groove 113. The armature winding 120 is located in the mounting groove 113, the surface of the armature winding 120 facing away from the bottom surface 111 is coplanar with the second sub-surface 1122.

Due to the facts that the base 110 is provided with the mounting groove 113 and the armature winding 120 is located in the mounting groove 113, compared with a method of directly mounting the armature winding outside the base, the size of the stator module 100 may be effectively reduced, the armature winding 120 is better protected against external damage, and the service life of the armature winding 120 is prolonged. Meanwhile, due to arrangement of the mounting groove 113, positioning for mounting of the armature winding 120 and the base 110 is facilitated, the assembly efficiency of the armature winding 120 and the base 110 is improved, and maintenance and replacement of the armature winding 120 are convenient to implement. Moreover, the surface, facing away from the bottom surface 111, of the armature winding 120 is coplanar with the second sub-surface 1122 of the base 110, so that the armature winding 120 is completely accommodated in the mounting groove 113, which is conductive to keeping flatness of a surface of the stator module 100. Thus, under a situation that the mover module 300 and the armature winding 120 keep a small magnetic gap therebetween but have a high magnetic utilization rate, a gap between the mover module 300 and other parts of the stator module 100 is also relatively small, which also makes the size of the whole conveying device 10 more compact.

In some exemplary embodiments, the mounting groove 113 may be formed by a concave part in the base 110, for example, a thickness of the base 110 in a direction perpendicular to the first sub-surface 1121 is relatively large, and the mounting groove 113 may be only a concave part in the first surface 112 of the base 110. In this exemplary solution, the mounting groove 113 may be formed by grooving, stamping, etc. after the base 110 is molded, or the mounting groove 113 may be formed directly after the base 110 is molded by injection and other processes.

In other exemplary embodiments, seen from a side where the first surface 112 is located, a portion, corresponding to the mounting groove 113, of the base 110 may be a concave part; and seen from a side where the bottom surface 111 is located, the portion, corresponding to the mounting groove 113, of the base 110 may be a convex part. For example, the thickness of the base 110 in the direction perpendicular to the first sub-surface 1121 is relatively small, and the mounting groove 113 may be formed by a portion of the base 110 raising in a direction from the first surface 112 to the bottom surface 111. In this exemplary solution, the mounting groove 113 may be formed by stamping and other processes after the base 110 is molded, or the mounting groove 113 may be formed directly after the base 110 is molded by injection and other processes.

Optionally, after the armature winding 120 is placed in the mounting groove 113, the armature winding 120 and the base 110 may also be fixed through at least one of screwing, gluing, welding and clamping, so as to improve the connection reliability between the armature winding 120 and the base 110.

Continuing to refer to Fig. 2, the base 110 also includes a first side face 114 and a second side face 115 disposed opposite to each other in a first direction x, where the first direction x is parallel to the second sub-surface 1122, and the first direction x may be an extension direction of the base 110. The first side face 114 and the second side face 115 are connected with two opposite sides of the first surface 112. The mounting groove 113 penetrates through the first side face 114 and/or the second side face 115.

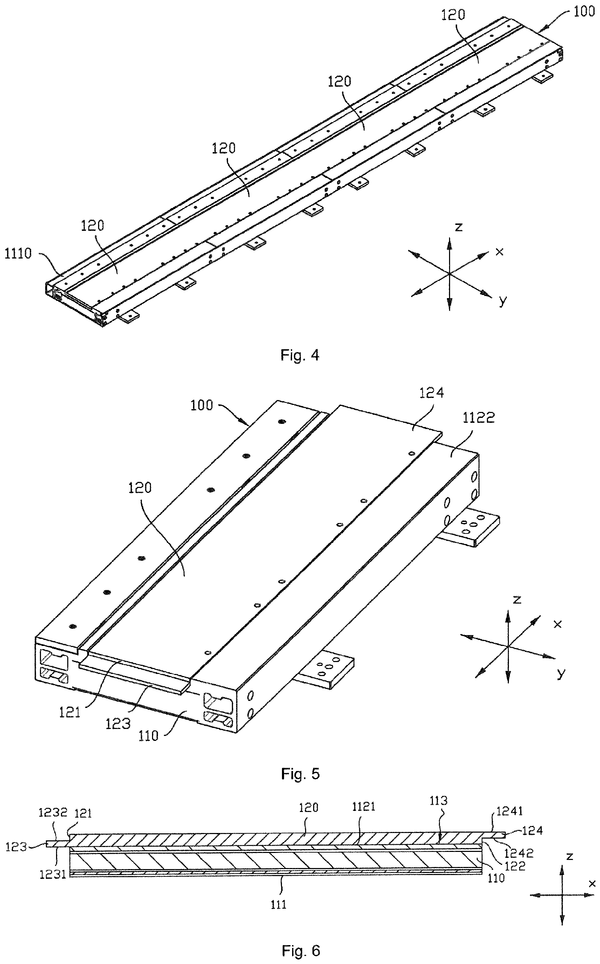

If the mounting groove 113 penetrates through the first side face 114 but does not penetrate through the second side face 115 or if the mounting groove 113 penetrates through the second side face 115 but does not penetrate through the first side face 114, the armature winding 120 may be disposed close to a side, not penetrated through, of the base 110, so that the mounting accuracy of the armature winding 120 in the mounting groove 113 is improved. When bases 110 of two adjacent stator modules 100 are spliced in the first direction x, one sides, through which armature windings 120 penetrate, of the bases 110 may be spliced with each other, so that the adjacent stator modules 100 have higher repeated positioning accuracy at a joint. If the mounting groove 113 penetrates through the first side face 114 and the second side face 115, referring to Fig. 4, when a plurality of armature windings 120 are spliced in sequence in the first direction x, surfaces, close to each other, of every two adjacent armature windings 120 may be closer and may be attached, so that a joint between every two adjacent armature windings 120 is smaller. Moreover, by performing splicing with the adjacent armature windings 120 as a mutual reference, the adjacent stator modules 100 have high repeated positioning accuracy at the joint, so that a conveying line formed by splicing a plurality of stator modules 100 has higher conveying accuracy, which is especially reflected in the higher repeated positioning accuracy of the mover module 300 at the joint of the stator modules 100.

Further, if the mounting groove 113 penetrates through the first side face 114 and the second side face 115, continuing to refer to Fig. 2, the armature winding 120 includes a first face 121 and a second face 122 disposed opposite to each other in the first direction x, the first face 121 is close to the first side face 114 and is coplanar with the first side face 114, and the second face 122 is close to the second side face 115 and is coplanar with the second side face 115. In this way, the internal space of the mounting groove 113 in the base 110 is fully utilized under the situation that the armature winding 120 is accommodated in the base 110, and thus the stator module 100 may have a smaller arrangement size. It is to be understood that when a plurality of stator modules 100 are spliced in the first direction x, for every two adjacent stator modules 100, when the bases 110 are spliced with each other, the first side face 114 of one base 110 is spliced with the second side face 115 of the other base 110, and the first face 121 of one armature winding 120 is spliced with the second face 122 of the other armature winding 120 on the basis of ensuring splicing accuracy of the bases 110, so that the splicing accuracy of the adjacent armature windings 120 is further improved, and a joint between every two adjacent armature windings 120 may be smaller, thereby improving the repeated positioning accuracy of the mover module 300 at the joint of the armature windings 120.

Referring to Fig. 2, Fig. 3, Fig. 5 and Fig. 6, the first face 121 of the armature winding 120 may be provided with a first splicing portion 123, the second face 122 may be provided with a second splicing portion 124, an orthographic projection of the first splicing portion 123 on a first plane is staggered with an orthographic projection of the second splicing portion 124 on the first plane, and the first plane is perpendicular to the first direction x. The first splicing portion 123 and the second splicing portion 124 are configured as: when two adjacent armature windings 120 are spliced, the first splicing portion 123 of one armature winding 120 is spliced with the second splicing portion 124 of the other armature winding 120. The first splicing portion 123 and/or the second splicing portion 124 is provided with coils.

In this embodiment, through arrangement of the first splicing portion 123 and the second splicing portion 124, when a plurality of stator modules 100 are spliced in sequence in the first direction x, the first splicing portion 123 of one of the stator module 100 is spliced with the second splicing portion 124 of the other stator module 100, and since the first splicing portion 123 and/or the second splicing portion 124 are provided with the coils, the adjacent armature windings 120 may still be excited at the joint, and the magnetic field at the joint may still drive the mover module 300 to move. Thus, the driving force of the stator module 100 may not be changed greatly, the mover module 300 moves at the joint more stably, and the repeated positioning accuracy of the mover module 300 at the joint may be improved. It is to be explained that the joint in this embodiment is defined as a space between the first face 121 and the second face 122 and a space between the first splicing portion 123 and the second splicing portion 124.

The first splicing portion 123 may be disposed on the first face 121 in the first direction x in a protruding manner, and the second splicing portion 124 may be disposed on the second face 122 in the first direction x in a protruding manner. Alternatively, the first splicing portion 123 may be disposed on the first face 121 in the first direction x in a protruding manner, and the second splicing portion 124 may be disposed in the second face 122 in the first direction x in a concave manner. Alternatively, the first splicing portion 123 may be disposed in the first face 121 in the first direction x in a concave manner, and the second splicing portion 124 may be disposed on the second face 122 in the first direction x in a protruding manner.

The size of the first splicing portion 123 in the first direction x may be equal to the size of the second splicing portion 124 in the first direction x, so that when the first splicing portion 123 of one armature winding 120 is spliced with the second splicing portion 124 of the other armature winding 120, in the first direction x, the first face 121 of one armature winding 120 may make contact with the second face 122 of the other armature winding 120, and the first splicing portion 123 of one armature winding 120 may make contact with the second splicing portion 124 of the other armature winding 120, thereby improving the splicing accuracy every two adjacent stator modules 100.

Referring to Fig. 5 and Fig. 6, the first splicing portion 123 has a first splicing face 1231 and a second splicing face 1232 disposed opposite to each other in a second direction z. The second direction z is perpendicular to the second sub-surface 1121, and the second direction z may be a thickness direction of the base 110. The first splicing face 1231 is coplanar with the first sub-surface 1121. The second splicing portion 124 has a third splicing face 1241 and a fourth splicing face 1242 disposed opposite to each other in the second direction z, and the third splicing face 1241 is coplanar with the second sub-surface 1122. The second splicing face 1232 is coplanar with the fourth splicing face 1242, so that upon completion of splicing of two adjacent stator modules 100, the second splicing face 1232 and the fourth splicing face 1242 are almost in an attached state, so as to form a mutually supported effect, and thus a connecting structure of the two adjacent stator modules 100 at the joint is compact and firm. Alternatively, the second splicing face 1232 is parallel to the fourth splicing face 1242, and the distance between the second splicing face 1232 and the fourth splicing face 1242 is 0.1 mm-10 mm. In this way, there is an assembly allowance between the two adjacent stator modules 100 in the assembly process, which facilitates mounting of the two adjacent stator modules 100. It is to be understood that the splicing accuracy of the two adjacent stator modules 100 may be increased by the above forms respectively, and that with the increase of the splicing accuracy of the two adjacent stator modules 100, the control accuracy and movement accuracy of the mover module 300 may be improved, and the repeated positioning accuracy of the mover module 300 on the whole conveying device 10 is improved.

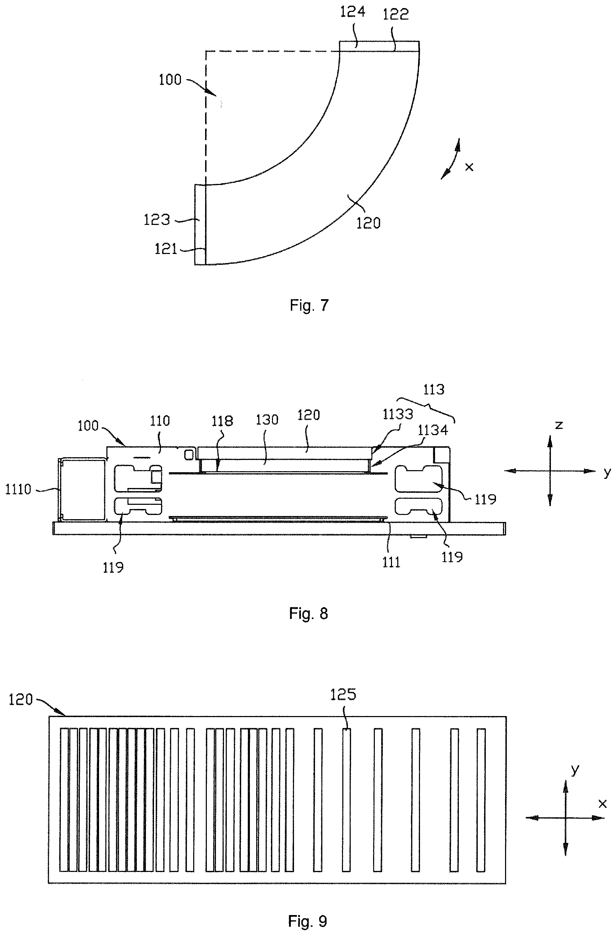

In some embodiments, referring to Fig. 5 and Fig. 6, the first direction x may be approximately a linear direction, that is, the base 110 and the armature winding 120 are both approximately linear. In other embodiments, referring to Fig. 7, the first direction x may be approximately an arc direction, that is, the base 110 and the armature winding 120 are both approximately arc, and the plane where the first face 121 is located is perpendicular to the plane where the second face 122 is located. That is, the stator module 100 in this embodiment is an arc stator, thereby achieving reversal of the extension direction of the stator module 100. In this embodiment, the included angle α between the first face 121 and the second face 122 of the arc stator is not limited, and the included angle α may be 15°, 30°, 45°, 60°, 75°, 90°, 105°, 120°, 135°, 150°, 165°, etc.

It is to be understood that referring to Fig. 2 and Fig. 3, the base 110 has a third side face 116 and a fourth side face 117 disposed opposite to each other in a third direction y. The third direction y is parallel to the second sub-surface 1122 and intersects with the first direction x, and the third direction y may be a width direction of the base 110. The third side face 116 and the fourth side face 117 are connected with two opposite sides of the first surface 112. The third side face 116 and the fourth side face 117 are both connected between the first side face 114 and the second side face 115. Inner side walls of the mounting groove 113 have a first groove wall 1131 and a second groove wall 1132 disposed opposite to each other in the third direction y. The first groove wall 1131 is disposed close to the third side face 116, and the second groove wall 1132 is disposed close to the fourth side face 117. The first groove wall 1131 and the second groove wall 1132 belong to part of the third sub-surface 1123. The distance from the first groove wall 1131 to the third side face 116 is approximately equal to the distance from the second groove wall 1132 to the fourth side face 117. Since the distance between the first groove wall 1131 and the third side face 116 is designed to be approximately equal to the distance between the second groove wall 1132 and the fourth side face 117, this enables the base 110 to be approximately an axisymmetric structure in the third direction y, facilitating the processing and manufacturing of the base 110.

Further, a distance between the armature winding 120 disposed in the mounting groove 113 and the third side face 116 of the base 110 may be approximately equal to a distance between the armature winding 120 disposed in the mounting groove 113 and the fourth side face 117. Specifically, when the armature winding 120 is disposed in the mounting groove 113, the armature winding 120 may be abutted against the first groove wall 1131 and the second groove wall 1132 of the mounting groove 113 respectively to avoid the armature winding 120 from moving in the mounting groove 113 in the third direction y, and the mounting stability of the armature winding 120 in the mounting groove 113 in the third direction y is improved. In addition, if the armature winding 120 and the base 110 further need to be fixed by screwing, gluing, welding and other means, a prefixing effect of the armature winding 120 and the mounting groove 113 may also be achieved by making the armature winding 120 abutted against the first groove wall 1131 and the second groove wall 1132 of the mounting groove 113 respectively, and implementation of the operations such as screwing, gluing and welding between the armature winding 120 and the base 110 is facilitated. In this embodiment, when the armature winding 120 is disposed in the mounting groove 113, the armature winding 120 may be respectively attached to the first groove wall 1131 and the second groove wall 1132 of the mounting groove 113.

Referring to Fig. 8, the stator module 100 may further include a driver 130. The driver 130 is disposed on the base 110. The driver 130 is electrically connected with the armature winding 120 and configured to drive and control periodic energization of the armature coils in the armature winding 120. The driver 130 may be an MCU, a circuit board, a power supply and other circuit components. The electrical connection between the driver 130 and the armature winding 120 may be at least one of the wire connection, the pluggable connection and welded connection. Specifically, the driver 130 and the armature winding 120 may be directly electrically connected via a wire. Alternatively, the driver 130 and the armature winding 120 may also achieve the pluggable connection via a socket, which facilitates disassembly and replacement of the driver 130 and the armature winding 120. For another example, the driver 130 and the armature winding 120 are of an integrated structure directly by means of welding, and this structure facilitates implementation of miniaturization of the stator module 100, and makes the driver 130 drive the armature winding 120 more stably.

In some exemplary embodiments, the driver 130 and the armature winding 120 may be integrated into a one-piece structure, for example, the driver 130 may be printed with the armature winding 120, thereby reducing the size of the driver 130 and the armature winding 120 and increasing the response speed of the driver 130 and the armature winding 120. In this exemplary solution, the driver 130 may be a PCB winding to facilitate mounting of the driver 130 to the base 110. The PCB winding may be provided with common circuit components such as controllers and drivers; or, the armature winding 120 may be formed by stacking a plurality of layers of PCB windings.

In other exemplary embodiments, the driver 130 and the armature winding 120 may be provided separately. The driver 130 may be an integrated circuit board integrated with various types of electrical components, and the integrated circuit board may control the power on and off of the armature winding 120 by transferring control signals and electrical energy to the integrated circuit board.

In this embodiment, the stator module 100 may further include an indicator light (not shown in figures), which may be disposed on the first surface 112 to visually indicate a usage status of the stator module 100, and the indicator light is electrically connected with the driver 130.

Next, the structure of the stator module 100 is described in detail with the driver 130 and the armature winding 120 provided separately as an example.

Referring to Fig. 8, the driver 130 is located in the mounting groove 113. Since the driver 130 is disposed in the mounting groove 113, the driver 130 may be better protected against damage caused by external factors such as collision. Meanwhile, the driver 130 and the armature winding 120 are both located in the mounting groove 113, and the driver 130 may achieve electrical contact with the armature winding 120 via a short line, so that the electrical connection between the driver 130 and the armature winding 120 may be more stable.

Further, the driver 130 and the armature winding 120 may be distributed in the second direction z, and the driver 130 is closer to the bottom surface 111 compared to the armature winding 120. That is, the driver 130 is located on a groove bottom side of the mounting groove 113 and the armature winding 120 is located on a groove opening side of the mounting groove 113, which may reduce a distance between the armature winding 120 and the permanent magnet array 320 when the stator module 100 and the mover module 300 cooperate, and enhance the intensity of action of the magnetic field between the stator module 100 and the mover module 300, so that the mover module 300 may be driven even when an energizing current of the coils inside the armature winding 120 is changed very little, and the responsiveness between the stator module 100 and the mover module 300 is improved.

Further, the mounting groove 113 includes a first accommodating groove 1133 and a second accommodating groove 1134 communicating with each other. The second accommodating groove 1134 is closer to the bottom surface 111 than the first accommodating groove 1133. The armature winding 120 is located in the first accommodating groove 1133, and the driver 130 is located in the second accommodating groove 1134. A projection of a groove opening of the second accommodating groove 1134 on the bottom surface 111 is located in a projection of an inner side wall of the first accommodating groove 1133 on the bottom surface 111. On the one hand, due to arrangement of the first accommodating groove 1133 and the second accommodating groove 1134, separate arrangement spaces are provided for the armature winding 120 and the driver 130, and mounting of the armature winding 120 and the driver 130 is facilitated. On the second hand, since the projection of the groove opening of the second accommodating groove 1134 on the bottom surface 111 is located in the projection of the first accommodating groove 1133 on the bottom surface 111, the first accommodating groove 1133 and the second accommodating groove 1134 form a countersunk hole structure jointly. In addition, the groove bottom of the first accommodating groove 1133 is disposed back to the bottom surface 111, one side, close to the bottom surface 111, of the armature winding 120 may be abutted against the groove bottom of the first accommodating groove 1133, and one side, close to the bottom surface 111, of the driver 130 may be abutted against the groove bottom of the second accommodating groove 1134, so that the armature winding 120 and the driver 130 may be mounted more stably. Since one side, close to the bottom surface 111, of the armature winding 120 is abutted against the groove bottom of the first accommodating groove 1133, the base 110 may play a role in supporting the armature winding 120, which may avoid crushing damage to the driver 130 or the electrical components on the driver 130 compared to a method of directly stacking the armature winding on the driver 130.

It is to be noted that a depth of the second accommodating groove 1134 in the second direction z may be flexibly adjusted in accordance with actual needs. For example, the depth of the second accommodating groove 1134 in the second direction z may be approximately equal to a thickness of the driver 130 in the second direction z. For another example, the depth of the second accommodating groove 1134 in the second direction z may be slightly greater than the thickness of the driver 130 in the second direction z, so that there is still part of space left after the driver 130 is placed into the second accommodating groove 1134 to allow the electrical connection structure of the driver 130 and the armature winding 120 to be placed into. Further, the depth of the second accommodating groove 1134 in the second direction z may meet a condition: a surface, close to the driver 130, of the armature winding 120 is spaced apart from the driver 130 so that heat may be dissipated from a gap between the two, the heat dissipation speed is increased, and negative effects such as short circuit and low efficiency caused by overheating of the armature winding 120 are avoided.

Optionally, the dimension of the second accommodating groove 1134 in the third direction y may be approximately equal to the dimension of the driver 130 in the third direction y, so that when the driver 130 is placed in the second accommodating groove 1134, the driver 130 may be respectively abutted against two groove walls of the second accommodating groove 1134 disposed opposite to each other in the third direction y to avoid movement of the driver 130 in the second accommodating groove 1134 in the third direction y, thereby improving the mounting stability of the driver 130 in the second accommodating groove 1134 in the third direction y. In this embodiment, when the driver 130 is placed in the second accommodating groove 1134, the driver 130 may be attached to the two groove walls of the second accommodating groove 1134 disposed opposite to each other in the third direction y.

Optionally, the driver 130 and the base 110 may also be fixed by at least one of screwing, gluing, welding, and clamping to enhance the connection reliability between the driver 130 and the base 110. If the driver 130 is respectively abutted against the two groove walls of the second accommodating groove 1134 disposed opposite to each other in the third direction y, a prefixing effect of the driver 130 and the second accommodating groove 1134 may also be achieved, which facilitates implementation of the operations such as screwing, gluing and welding between the driver 130 and the base 110.

It is to be noted that the driver 130 may also be fixed to the armature winding 120 by at least one of screwing, gluing, welding, and clamping, which will not be repeated.

It is to be noted that the driver 130 and the armature winding 120 may also be disposed in other forms besides being distributed in the second direction z, for example, the driver 130 and the armature winding 120 may be distributed in the third direction y, or, in the first direction x, etc. The relative positions of the driver 130 and the armature winding 120 may be set according to the actual needs, which is not limited.

Referring to Fig. 8, the base 110 may be provided with a heat dissipation channel 118, the heat dissipation channel 118 penetrates through the base 110, and the heat dissipation channel 118 communicates with the second accommodating groove 1134. In this way, the heat dissipation channel 118 may guide heat generated by the driver 130 toward the outside for dissipation, thereby achieving passive heat dissipation of the driver 130 and improving the heat dissipation performance of the stator module 100.

It is to be noted that the heat dissipation channel 118 may penetrate through the base 110 as: the heat dissipation channel 118 penetrates through the base 110 in at least one of the first direction x, the third direction y, and the second direction z, which may be flexibly designed according to the actual needs and is not limited. The cross-sectional shape, location, and quantity of the heat dissipation channel 118 may be flexibly designed according to the actual needs. For example, a cross-sectional shape of the heat dissipation channel 118 may be approximately a slit to avoid impurities and the like from entering the heat dissipation channel 118 to cause blockage of the heat dissipation channel 118. For example, the quantity of the heat dissipation channels 118 may be two, and the two heat dissipation channels 118 are located on two opposite sides of the driver 130 in the second direction z, so that air flowing through the two heat dissipation channels 118 may carry away heat of two sides, facing away from each other, of the driver 130 in the second direction z. Since the driver 130 is approximately of a sheet-like structure, and the electrical components on the driver 130 are mainly disposed on the two plate surface facing away from each other in the second direction z, by providing the two heat dissipation channels 118 respectively on the two opposite sides of the driver 130 in the second direction z, heat generated by the electrical components on the driver 130 may be dissipated in a directed manner, and the heat dissipation effect is better.

Further, the stator module 100 may further include a cooling fan. The cooling fan may be disposed in the second accommodating groove 1134 of the mounting groove 113 to further increase the diffusion speed of heat around the driver 130 and enhance the heat dissipation effect. Specifically, an air outlet of the cooling fan may be provided toward the driver 130, so that under the action of the cooling fan, an external airflow may reach the vicinity of the driver 130 through the heat dissipation channel 118 and, after carrying the heat near the driver 130, is dissipated to the outside again through the heat dissipation channel 118.

In other embodiments, the stator module 100 may further include a heat dissipation profile, which may be made of aluminum and other materials. The heat dissipation profile is disposed in the second accommodating groove 1134 and located between the armature winding 120 and the driver 130. The heat dissipation profile may be fixedly connected to at least one of the armature winding 120 and the driver 130 to dissipate heat of the armature winding 120 or the driver 130. The heat dissipation profile may be provided in a fin-like structure, a blade-like or a leaf-like structure, so that the heat dissipation profile may have a large heat dissipation area and a better heat dissipation effect.

Referring to Fig. 8, the base 110 may be provided with at least one weight reduction groove 119. The weight of the stator module 100 may be reduced through the weight reduction groove 119. The weight reduction groove 119 may penetrate through the base 110 in at least one of the first direction x, the third direction y, and the second direction z, which is not limited. In the embodiment of the present application, the weight reduction groove 119 penetrate through the base 110 in the first direction x, and a plurality of weight reduction grooves 119 are provided. The plurality of weight reduction grooves 119 are located on two opposite sides of the mounting groove 113 in the third direction y, so that the base 110 is approximately of a symmetrical structure, the structural strength of each part of the base 110 may be approximately balanced, and a part with weak stress is not likely to be formed.

In other embodiments, the weight reduction groove 119 may also communicate with the second accommodating groove 1134, that is, the weight reduction groove 119 may also be equivalent to the heat dissipation channel 118. Specifically, in the first direction x, at least part of the projection of the driver 130 in the first direction x is located in the weight reduction groove 119, that is, air flowing through the weight reduction groove 119 may carry away the heat emitted by the driver 130.

Further, the base 110 may have at least one socket (not shown in figures). The socket may be provided in the middle of the base 110 and communicates with the second accommodating groove 1134. External cables are electrically connected with the driver 130 through the socket. It is to be understood that the driver 130 is provided with interfaces such as a power input terminal, a power output terminal, a signal inlet terminal and a signal outlet terminal. Such interfaces are used for being in pluggable connection with the external cables to achieve power supply, signal exchange and other operations. In this embodiment, the socket is provided in the base 110, and the socket is used for exposing the various interfaces of the driver 130 to achieve signal transmission and power supply transmission between drivers 130. On the other hand, by providing the socket only at the interfaces, the exposed area of the driver 130 may be reduced, which allows the driver 130 to have a safer arrangement environment. Optionally, the socket may also communicate with the weight reduction groove 119, which is not limited.

Further, to facilitate the collection of external cables, the stator module 100 may also include a collection member 1110. The collection member 1110 is connected with the base 110, and the collection member 1110 is provided with a collection cavity communicating with the socket. The external cables are disposed in the collection cavity to avoid the cables interfering with moving of the mover module 300.

In other embodiments, the socket is disposed close to the first side face 114 and/or the second side face 115, so that a connection line between two adjacent stator modules 100 has a short setting length, which facilitates plugging and pulling of the connection line between the adjacent stator modules 100. When the connection line between the two adjacent stator modules 100 has a short arrangement length, the connection line may also be disposed in the weight reduction groove 119, so as to reasonably utilize the internal space of the stator module 100.

Next, the arrangement of the plurality of coils in the armature winding 120 is described in detail.

Referring to Fig. 9 to Fig. 12, the plurality of coils in the armature winding 120 may be divided into at least one coil group 125. The coil group 125 includes a plurality of coils, and all of the coils in the same coil group 125 extend in the same direction and are arranged in sequence in another direction intersecting the extension direction of the coils. In the same coil group 125, at least part of adjacent two coils may be spaced apart, or, at least part of adjacent two coils may be disposed in an attached manner. If every two adjacent coils in the same coil group 125 are spaced apart, distances between every two adjacent coils may be equal or unequal. Further, if every two adjacent coils in the same coil group 125 are spaced apart, the distance between the two adjacent coils may be approximately equal to the polar distance of any one of the two adjacent coils, where the polar distances of every two adjacent coils may be equal or unequal. Extension lengths of every two adjacent coils in the same coil group 125 may be equal or unequal.

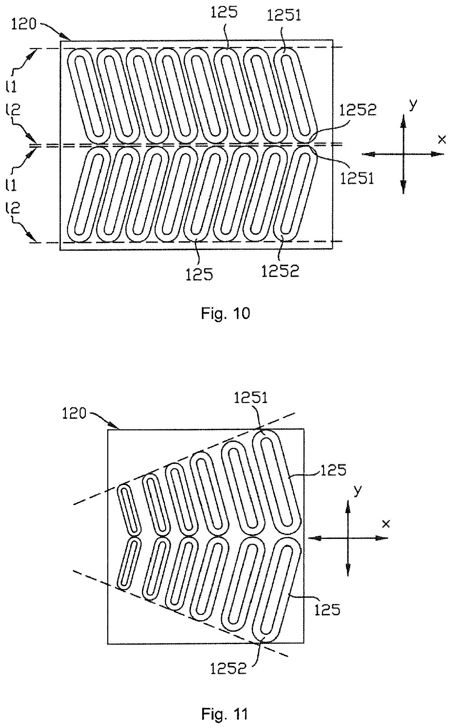

Referring to Fig. 9, the plurality of coils in the armature winding 120 may be divided into one coil group 125. Referring to Fig. 10 to Fig. 12, the plurality of coils in the armature winding 120 may also be divided into at least two coil groups 125, and an angle is reserved between extension directions of the coils in the two adjacent coil groups 125, so that when the stator module 100 is coupled with the mover module 300, the stator module 100 may provide a sufficiently large pushing force to enable the mover module 300 to move more stably.

Further, the acute angle between the extension directions of the coils in every two adjacent coil groups 125 may be greater than or equal to 15° and smaller than or equal to 75°, so that when the stator module 100 is coupled with the mover module 300, the pushing force provided by the stator module 100 is large enough and stable. Optionally, the acute angle between the extension directions of the coils in every two adjacent coil groups 125 may be 15°, 30°, 45°, 60°, 75°, etc.

Every two adjacent coil groups 125 may be disposed symmetrically, for example, in conjunction with Fig. 10 and Fig. 11, the two adjacent coil groups 125 may be disposed symmetrically with a straight line parallel to the first direction x as an axis of symmetry. Every two adjacent coil groups 125 may also be provided asymmetrically, for example, in conjunction with Fig. 12, the two adjacent coil groups 125 may be staggered in the first direction x, so that the design of the coils is more compact, and a miniaturization design of the stator module 100 is achieved. Specifically, each of the coils in the coil groups 125 has a first end portion 1251 and a second end portion 1252 disposed opposite to each other in an arrangement direction of the at least two coil groups 125. The first end portions 1251 of all of the coils in the coil groups 125 are located on one sides of the coil groups 125, and the second end portions 1252 of all of the coils in the coil groups 125 are located on the other sides of the coil groups 125. In two adjacent coil groups 125, the first end portions 1251 of the coils in one coil group 125 may be disposed close to the second end portions 1252 of the coils in the other coil group 125. In two adjacent coil groups 125, the first end portion 1251 of each of the coils in one coil group 125 may be located between the second end portions 1252 of the corresponding two adjacent coils of the other coil group 125 in the first direction x.

In conjunction with Fig. 10, the first end portions 1251 of all of the coils in the coil group 125 may be located in the same straight line, for example, a first straight line 11. The first straight line l1 may be parallel to the first direction x or may intersect the first direction x. The second end portions 1252 of all of the coils in the coil group 125 may be located in the same straight line, for example, a second straight line l2. The second straight line l2 may be parallel to the first direction x or may intersect the first direction x.

If the first end portions 1251 of all of the coils in the coil group 125 are located in the same straight line, and the second end portions 1252 of all of the coils in the coil group 125 are located in the same straight line, in the two adjacent coil groups 125, the first straight line 11 in which the first end portions 1251 of all of the coils in one coil group 125 are located is symmetric with the second straight line l2 in which the second end portions 1252 of all of the coils in the other coil group 125 are located, for example, with a straight line parallel to the first direction x as an axis of symmetry.

It is to be noted that the first end portions 1251 of all of the coils in the coil group 125 may also not be located in the same straight line, and the second end portions 1252 of all of the coils in the coil group 125 may also not be located in the same straight line, which are not limited.

It is to be understood that the arrangement of the plurality of coils in the armature winding 120 may be flexibly adjusted according to the actual needs, for example, based on a shape of the mounting groove 113, where a shape of the armature winding 120 may be approximately determined based on the shape of the mounting groove 113. The arrangement of the plurality of coils may meet approximately uniform distribution of each part of the armature winding 120, such that each part of the armature winding 120 may provide approximately equal pushing force to the mover module 300 to ensure stable moving of the mover module 300.

Projections of the at least two coil groups 125 included in the armature winding 120 on the bottom surface 111 may be located in the base 110 or partially beyond the base 110. Coils corresponding to the outside of the base 110 may be mounted on the above-mentioned first splicing portion 123 and/or second splicing portion 124, which will not be repeated.

Optionally, the coils in at least one coil group 125 may be in one-to-one correspondence connection with the coils in the other adjacent coil group 125, so that every two connected coils in the two adjacent coil groups 125 are combined to form a zigzag coil, and the coils of the armature winding 120 having a plurality of zigzag coils may be formed as a two-phase amplifier, a three-phase amplifier, a five-phase amplifier, and the like. It is to be noted that the coils of every two adjacent coil groups 125 in up to five adjacent coil groups 125 may be set to be in one-to-one correspondence connection, so that the number of twists of each zigzag coil is greater than or equal to 1 and less than or equal to 4.

In a second aspect, referring to Fig. 13, an embodiment of the present application provides a conveying device 10. The conveying device 10 includes a substrate 200, a mover module 300, and the above-mentioned stator module 100. The stator module 100 is fixedly mounted on the substrate 200, and the mover module 300 is slidably connected with the substrate 200. Specifically, when the stator module 100 is coupled with the mover module 300, the mover module 300 may slide relative to the substrate 200 to achieve directional conveying of objects.

The substrate 200 includes a bottom plate 210 and two guide rails 220 connected with the bottom plate 210. The two guide rails 220 may both extend in a first direction x and are spaced apart in a third direction y. The two guide rails 220 and the bottom plate 210 are enclosed to form an accommodating cavity 230, and the stator module 100 is located in the accommodating cavity 230. A bottom surface 111 of the base 110 is fixedly connected with the bottom plate 210. The mover module 300 is located on one side, away from the bottom plate 210, of an armature winding 120. The mover module 300 includes a carrying portion 310 and a permanent magnet array 320 connected with the carrying portion 310. The carrying portion 310 is slidably connected with the two guide rails 220. The permanent magnet array 320 is located between the carrying portion 310 and the armature winding 120, and the permanent magnet array 320 is disposed corresponding to the armature winding 120.

In the conveying device 10 according to the embodiment of the present application, a mounting groove 113 is provided in the base 110, and the armature winding 120 is located in the mounting groove 113, so that the internal space of the conveying device 10 is reasonable utilized, and the conveying device 10 may have a smaller occupation space. A surface, facing away from the bottom surface 111, of the armature winding 120 is coplanar with a first surface 112, so that the stator module 100 has a flatter conveying surface. Thus, an arrangement distance between the armature winding 120 and the permanent magnet array 320 may be smaller, and the mover module 300 is subjected to a greater pushing force. Moreover, the armature winding 120 is completely disposed in the mounting groove 113, so that the thickness of the stator module 100 is reduced, and the size of the conveying device 10 is further reduced. Due to the small size of the stator module 100, when objects transported by the mover module 300 fall into the accommodating cavity 230, it is convenient for staff to quickly find and take out the objects, so as to avoid affecting the efficiency of the conveying device 10 or damaging the conveying device 10.

The fixed connection between the base 110 of the stator module 100 and the substrate 200 may be a direct connection or an indirect connection. In the embodiment of the present application, the base 110 is fixedly connected with the substrate 200 through at least two bridging blocks 240. A distance between the armature winding 120 of the stator module 100 and the permanent magnet array 320 may be adjusted through the at least two bridging blocks 240, so that distances between parts of the armature winding 120 and the permanent magnet array 320 are approximately equal, and then when the mover module 300 is coupled with the stator module 100, current excitation of each part of the mover module 300 is approximately the same to ensure the drive stability of the mover module 300. The distance between the armature winding 120 and the permanent magnet array 320 may be adjusted by replacing the bridging blocks 240, which is easy to operate and conducive to the use of the conveying device 10 in different application scenarios.

The armature winding 120 may be spaced from the two guide rails 220 by an approximately equal distance, and the permanent magnet array 320 may be spaced from the two guide rails 220 by an approximately equal distance, so that both the armature winding 120 and the permanent magnet array 320 are approximately located in middle positions of the two guide rails 220. During sliding of the mover module 300 relative to the guide rails 220, the permanent magnet array 320 and the armature winding 120 at the middle positions of the two guide rails 220 may always keep a corresponding relationship, so that forces for the mover module 300 to move to each part are approximately the same, a situation that force at a part fluctuates is not prone to occurring, the probability of overturning or eccentric movement of the mover module 300 during movement may be avoided, and the mover module 300 may move more stably.

Next, the structure of the permanent magnet array 320 is described in detail.

The permanent magnet array 320 includes a plurality of permanent magnets, and the plurality of permanent magnets in the permanent magnet array 320 may be divided into at least one permanent magnet group. A permanent magnet group includes the plurality of permanent magnets. All of the permanent magnets in the permanent magnet group extend in the same direction and are arranged in sequence in another direction intersecting an extension direction of the permanent magnets. In the same permanent magnet group, at least part of adjacent two permanent magnets may be spaced apart, or, at least part of adjacent two permanent magnets may be disposed in an attached manner. If every two adjacent permanent magnets in the same permanent magnet group are spaced apart, the distance between every two adjacent permanent magnets may be equal or unequal. Further, if every two adjacent permanent magnets in the same permanent magnet group are spaced apart, the distances between every two adjacent permanent magnets may be approximately equal to a magnetic distance of any one of the two adjacent permanent magnets, where the magnetic distances of every two adjacent permanent magnets may be equal or unequal. Extension lengths of every two adjacent permanent magnets in the same permanent magnet group may be equal or unequal.

The plurality of permanent magnets in the permanent magnet array 320 may be divided into one permanent magnet group. The plurality of permanent magnets in the permanent magnet array 320 may also be divided into at least two permanent magnet groups, and an angle is reserved between extension directions of the permanent magnets in every two adjacent permanent magnet groups. Further, the acute angle between the extension directions of the permanent magnets in every two adjacent permanent magnet groups may be greater than or equal to 15° and less than or equal to 75°. For example, the acute angle between the extension directions of the permanent magnets in every two adjacent permanent magnet groups may be 15°, 30°, 45°, 60°, 75°, etc.

Every two adjacent permanent magnet groups may be disposed symmetrically, for example, every two adjacent permanent magnet groups may be disposed symmetrically with a straight line parallel to the first direction x as an axis of symmetry. Every two adjacent permanent magnet groups may also be provided asymmetrically, for example, every two adjacent permanent magnet groups may be staggered in the first direction x, so that the design of the permanent magnet array 320 is more compact. Specifically, every two adjacent permanent magnet groups may be staggered in the first direction x as: in the two adjacent permanent magnet groups, an end portion, close to the other permanent magnet group, of the permanent magnets in one permanent magnet group is located between end portions, close to the one permanent magnet group, of two adjacent permanent magnets in the other permanent magnet group in the first direction x.

The arrangement of the permanent magnets in the permanent magnet array 320 is matched with the arrangement of coils in the armature winding 120. For example, each coil corresponds to at least one permanent magnet, which specifically indicates: each coil corresponds to a permanent magnet; or, each coil corresponds to a plurality of permanent magnets; or, each coil of part of the coils corresponds to one permanent magnet, and each coil of the rest of the coils corresponds to a plurality of permanent magnets, which is not limited. Each permanent magnet may be an NS magnet, a halbach magnet, a combination of the NS magnet and the halbach magnet, etc., which is not limited.

The permanent magnet array 320 may be fixedly or detachably connected with the carrying portion 310. When the permanent magnet array 320 is detachably connected with the carrying portion 310, the permanent magnet array 320 may be replaced based on a load, so as to improve the conveying effect of the conveying device 10.

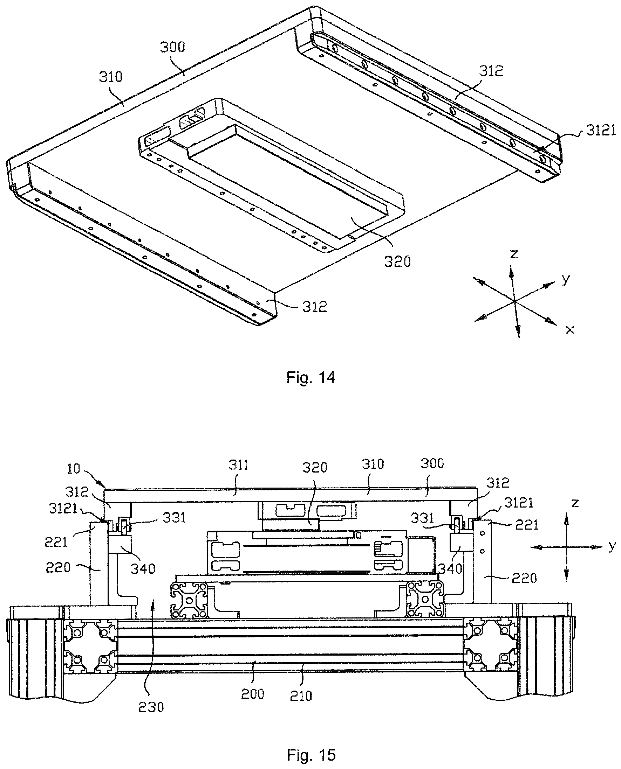

Referring to Fig. 13 and Fig. 14, a plurality of rolling members 330 may be disposed between each of the guide rails 220 and the carrying portion 310, and the plurality of rolling members 330 are disposed in the first direction x. Due to arrangement of the rolling members 330, sliding friction between the guide rails 220 and the carrying portion 310 may be adjusted to rolling friction, so that the friction resistance during movement of the carrying portion 310 relative to the substrate 200 is reduced, and the carrying portion 310 may move more smoothly relative to the substrate 200.

Further, the carrying portion 310 includes a middle plate 311 and two side plates 312 connected with two opposite sides of the middle plate 311. The two side plates 312 are disposed in one-to-one correspondence with the two guide rails 220. The plurality of rolling members 330 are respectively disposed between each of the guide rails 220 and the corresponding side plate 312.

Referring to Fig. 13 to Fig. 16, each of the rolling members 330 may include a first roller 331, and the first roller 331 may be rotatably connected with one of the guide rail 220 and the side plate 312, for example, the first roller 331 may be rotatably connected with one of the guide rail 220 and the side plate 312 through a rolling shaft. The rolling shaft may penetrate through and is connected with the guide rail 220 or the side plate 312; or, the rolling shaft may not penetrate through the guide rail 220 or the side plate 312 and is connected with the guide rail 220 or the side plate 312, and the rolling shaft may be in threaded connection with the guide rail 220 or the side plate 312.

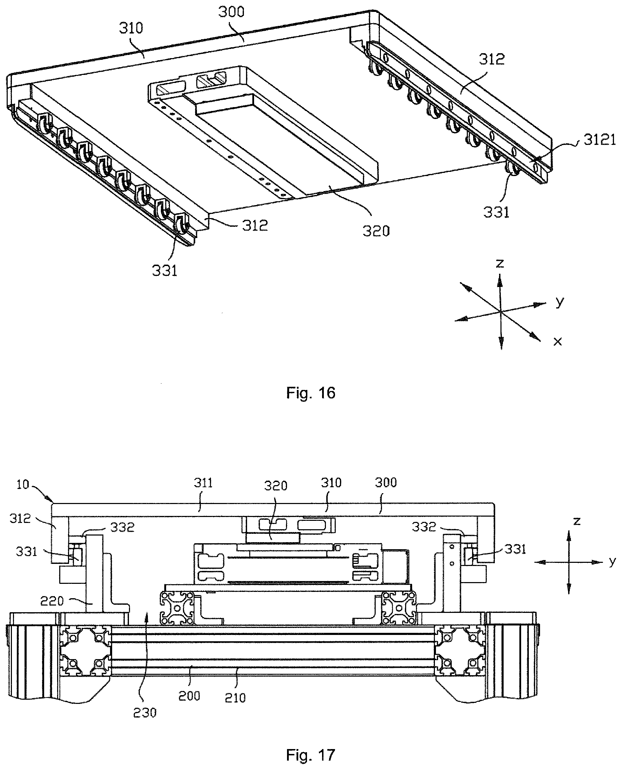

Specifically, for the first rollers 331 besides the two guide rails 220, the first roller 331 beside one of the guide rails 220 may be rotatably connected with the guide rail 220, and the first roller 331 beside the other guide rail 220 may be rotatably connected with the side plate 312. Alternatively, referring to Fig. 13, for the first rollers 331 beside the two guide rails 220, the first roller 331 beside each of the guide rails 220 may be rotatably connected with the guide rail 220. Alternatively, referring to Fig. 15 and Fig. 16, for the first rollers 331 beside the two guide rails 220, the first roller 331 beside each of the guide rails 220 may be rotatably connected with the corresponding side plate 312.

Further, if the guide rails 220 are rotatably connected with the first rollers 331, the side plates 312 of the carrying portion 310 may be directly lapped on the first rollers 331 to drive the carrying portion 310 to move relative to the substrate 200 when the first rollers 331 rotate. If the side plates 312 are rotatably connected with the first rollers 331, the side plates 312 of the carrying portion 310 may be directly lapped on the corresponding guide rails 220 through the first rollers 331 to drive the carrying portion 310 to move relative to the substrate 200 when the first rollers 331 rotate. The above two connection methods respectively achieve movement relative to the substrate 200 through the gravity of the carrying portion 310 and the action of the first rollers 331, so that mutual constraints between the carrying portion 310 and the substrate 200 may be relieved, and disassembly and assembly are convenient. For example, when the quantity of mover modules 300 needs to be increased or decreased on the stator module 100, the mover modules 300 only need to be added or removed in a vertical direction. It is to be noted that lap surfaces of the first rollers 331 and the guide rails 220 or the side plates 312 may be located on a side, facing away from the bottom surface 111, of the first surface 112 of the base 110 to provide a sufficient distance between the base 110 and the carrying portion 310 for easy pickup when an object is dropped into the accommodating cavity 230.

It is to be noted that if the guide rails 220 are rotatably connected with the first rollers 331, in order to avoid the phenomenon of shifting caused when the side plates 312 are directly lapped on the first rollers 331, the side plates 312 may be provided with first sliding grooves (not shown in figures) extending in the first direction x, and the first rollers 331 may be partially placed in the first sliding grooves. Similarly, if the side plates 312 are rotatably connected with the first rollers 331, in order to avoid the phenomenon of shifting caused when the first rollers 331 are directly disposed on the guide rails 220, the guide rails 220 may be provided with second sliding grooves (not shown in figures) extending in the first direction x, and the first rollers 331 may be partially placed in the second sliding grooves.

In the embodiment of the present application, each of the guide rails 220 is provided with a first limiting portion 221, and each of the side plates 312 is provided with a second limiting portion 3121. The first limiting portion 221 of each of the guide rails 220 may be disposed corresponding to the second limiting portion 3121 of the corresponding side plate 312 to further avoid the problem of shifting during sliding of the carrying portion 310 relative to the substrate 200.

The first limiting portion 221 may be one of a limiting protrusion and a limiting groove, the second limiting portion 3121 may be the other of the limiting protrusion and the limiting groove, and the limiting protrusion and/or the limiting groove extends in the first direction x, which is not limited. The limiting groove may be provided in a side or middle of the guide rail 220 in the third direction y, or the limiting groove may be provided in a side or middle of the side plate 312 in the third direction y, and an arrangement position of the limiting protrusion corresponds to the arrangement position of the limiting groove.

Further, the limiting protrusion and the limiting groove of each of the guide rails 220 and the corresponding side plate 312 may be abutted against or spaced apart from each other in the third direction y to avoid shifting during sliding of the carrying portion 310 relative to the substrate 200 and to prevent the carrying portion and the substrate from being damaged due to mutual collision. The limiting protrusion and the limiting groove of each of the guide rails 220 and the corresponding side plate 312 may be abutted against or spaced apart from each other in the second direction z.

In conjunction with Fig. 13 to Fig. 16, the two side plates 312 may be disposed between the two guide rails 220. In this case, if the side plates 312 are connected with the first rollers 331 and the first rollers 331 are lapped on the guide rails 220, the first rollers 331 may be lapped on extension plates 340 on inner sides of the guide rails 220. Of course, the two guide rails 220 may also be disposed between the two side plates 312. In this case, if the side plates 312 are connected with the first rollers 331 and the first rollers 331 are lapped on the guide rails 220, the first rollers 331 may be lapped on extension plates (not shown in figures) on outer sides of the guide rails 220.

Preferably, the first rollers 331 are connected with the side plates 312. Compared with a connection between the first rollers 331 and the guide rails 220, due to the relatively independent structure of the mover module 300, the mounting accuracy of the first rollers 331 on the mover module 300 may be set as higher compared with the huge substrate 200, the mounting cost is lower, accordingly, the movement of the mover module 300 is more gentle, and noise generated during the movement may be lower.

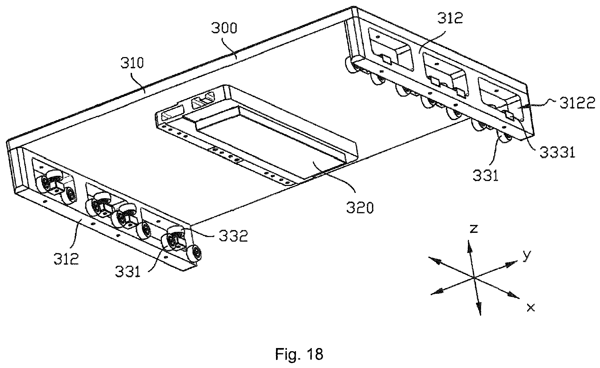

It is to be noted that, referring to Fig. 17 and Fig. 18, the guide rails 220 and the side plates 312 may not be provided with the first limiting portions 221 and the second limiting portions 3121, and the rolling members 330 further include second rollers 332, so as to avoid deviation during sliding of the carrying portion 310 relative to the substrate 200 through the second rollers 332. Specifically, if the guide rails 220 are staggered with the corresponding side plates 312 in the third direction y (for example, spaced apart or partially staggered in the third direction y), the second rollers 332 are disposed between the guide rails 220 and the corresponding side plates 312 in the third direction y and are abutted against the corresponding guide rails 220 and side plates 312, and the axes of rotation of the first rollers 331 are parallel to the second direction z. Compared with the abutted connection of the guide rails 220 and the corresponding side plates 312 in the third direction y, since the second rollers 332 are in rolling connection with the corresponding guide rails 220 and side plates 312 during sliding of the carrying portion 310 relative to the substrate 200, sliding friction may be converted into rolling friction to improve the sliding smoothness of the carrying portion 310 relative to the substrate 200.

Further, the first roller 331 and the second roller 332 of each rolling member 330 may be designed separately or in one piece. If the rolling members 330 are designed as one piece, the rolling members 330 may further include fixing bases, the first rollers 331 and the second rollers 332 are respectively rotatably connected with the fixing bases, and the rolling members 330 may be connected with the guide rails 220 or the side plates 312 through the fixing bases. For example, the guide rails 220 or the side plates 312 may be provided with fixing grooves 3122, and at least part of the fixing bases of the rolling members 330 may be disposed in the fixing grooves 3122 and are connected with the guide rails 220 or the side plates 312.

For example, referring to Fig. 18, the side plates 312 may be provided with the fixing grooves 3122, each of the fixing bases may be provided with a clamping hook 3331, and the fixing bases may be disposed in the fixing grooves 3122, with the clamping hooks 3331 clamped to the side plates 312 for connection and fixation. The rolling members 330 are connected with the side plates 312 by clamping, so that the disassembly and assembly between the rolling member 330 and the side plate 312 are convenient, and rolling members 330 may be flexibly additionally disposed according to the actual needs.

Further, the fixing grooves 3122 may penetrate through inner sides and outer sides of the side plates 312, so that the rolling members 330 may be mounted on either the inner sides of the side plates 312 or the outer sides of the side plates 312. The inner side of the side plate 312 refers to a side, close to another side plate 312, of the side plate 312, and the outer side of the side plate 312 refers to a side, away from the other side plate 312, of the side plate 312.

If the rolling members 330 are connected with the side plates 312, the side plates 312 may be detachably connected with the middle plate 311, so that the type and quantity of the rolling members 330 on the side plates 312 may be adjusted by replacing the side plates 312. If the rolling members 330 are connected with the guide rails 220, the guide rails 220 may be detachably connected with the bottom plate 210, so that the type and quantity of the rolling members 330 on the guide rails 220 may be adjusted by replacing the guide rails 220.

It is to be noted that the above rolling members 330 may also be replaced with sliders and chutes, and the chutes extend in the first direction x. For example, one of the substrate 200 and the carrying portion 310 may be provided with the sliders and the other with the chutes, and the sliders are disposed in the chutes and may slide in the chutes. Balls and the like may be embedded in the sliders or the chutes.

It is to be noted that the conveying device 10 according to the embodiment of the present application may achieve the movement of the mover module 300 relative to the stator module 100 in the first direction x through belt transmission, chain transmission and other ways except coupling between the permanent magnet array 320 of the mover module 300 and the armature winding 120 of the stator module 100, thereby achieving mixed conveying of the conveying device 10.

Specifically, if the conveying device 10 achieves the movement of the mover module 300 relative to the stator module 100 in the first direction x through belt transmission, chain transmission and other ways, the two side plates 312 of the carrying portion 310 of the mover module 300 may be removed from the middle plate 311, and carrier rollers and a belt or a chain and chain wheels are mounted on the guide rails 220, so that the mover module 300 may also be driven to move relative to the stator module 100 in the first direction x through moving of the belt or chain; or, carrier rollers and belts or chains and chain wheels are mounted on sides, different from the side plates 312, of the guide rails 220, so that when the belts or chains run, the rolling members 330 between the side plates 312 and the guide rails 220 may also move, thereby improving the stability of the movement of the mover module 300 relative to the stator module 100 in the first direction x.

Further, a lap surface between the belt or chain and the carrying portion 310 may be coplanar with the lap surface between the first rollers 331 and the guide rails 220, so that the situation that when a conveying manner is changed, polarization, vibration, stalling, etc. of the mover module 300 at a transition position have a negative impact on transportation of the mover module 300 and consequently the mover module 300 cannot stably convey workpieces is avoided.

It is to be noted that belt transmission, chain transmission and other conveying manners are active conveying, and the conveying speed thereof may be approximately the same as the conveying speed of the mover module 300 when the permanent magnet array 320 is coupled with the armature winding 120, thereby achieving stable moving of the mover module 300 relative to the stator module 100.

The same or similar numerals in the accompanying drawings of the embodiments correspond to the same or similar components. In the description of the present application, it is to be understood that the terms "upper", "lower", "left", "right", etc. indicate orientations or positional relationships based on the orientations or positional relationships shown in the accompanying drawings, and are merely for the convenience of describing the present application and simplifying the description, rather than indicating or implying that the referred devices or components must have a specific orientation, be constructed and operated in a specific orientation, so the terms used for describing the positional relationship in the accompanying drawings are for illustrative purposes merely and should not be construed as limitations on the patent. The specific meanings of the above terms will be understood by a person of ordinary skill in the art, depending on the circumstances.

The above are merely preferred embodiments of the present application, and are not intended to limit the present application. Any modifications, equivalent replacements, improvements, etc. made within the spirit and principles of the present application shall fall within the scope of protection of the present application.

## Claims

1. A stator module, wherein the stator module is applied to a conveying device, and the stator module comprises:
a base, comprising a bottom surface and a first surface facing away from the bottom surface, the first surface comprising a first sub-surface, a second sub-surface and a third sub-surface, the second sub-surface and the first sub-surface being spaced apart in a direction perpendicular to the first sub-surface, a projection of the second sub-surface on the first sub-surface being located on a periphery of the first sub-surface, the third sub-surface being connected between the first sub-surface and the second sub-surface, the first sub-surface, the second sub-surface and the third sub-surface being enclosed to form a mounting groove; and
an armature winding, located in the mounting groove, a surface of the armature winding facing away from a bottom surface being coplanar with the second sub-surface.

2. The stator module according to claim 1, wherein the base comprises a first side face and a second side face disposed opposite to each other in a first direction, the first direction is parallel to the second sub-surface, the first side face and the second side face are connected with two opposite sides of the first surface, and the mounting groove penetrates through the first side face and/or the second side face.

3. The stator module according to claim 2, wherein the mounting groove penetrates through the first side face and the second side face, the armature winding comprises a first face and a second face disposed opposite to each other in the first direction, the first face is close to the first side face and is coplanar with the first side face, and the second face is close to the second side face and is coplanar with the second side face.

4. The stator module according to claim 3, wherein the first face is provided with a first splicing portion, the second face is provided with a second splicing portion, the first splicing portion is disposed on the first face in the first direction in a protruding manner, and the second splicing portion is disposed on the second face in the first direction in a protruding manner;
or, the first splicing portion is disposed on the first face in the first direction in a protruding manner, and the second splicing portion is disposed in the second face in the first direction in a concave manner;
or, the first splicing portion is disposed in the first face in the first direction in a concave manner, and the second splicing portion is disposed on the second face in the first direction in a protruding manner,
wherein an orthographic projection of the first splicing portion on a first plane is staggered with an orthographic projection of the second splicing portion on the first plane, and the first plane is perpendicular to the first direction.

5. The stator module according to claim 4, wherein the first splicing portion has a first splicing face and a second splicing face disposed opposite to each other in a second direction, the second direction is perpendicular to the second sub-surface, and the first splicing face is coplanar with the first sub-surface; and
the second splicing portion has a third splicing face and a fourth splicing face disposed opposite to each other in the second direction, and the third splicing face is coplanar with the second sub-surface,
wherein the second splicing face is coplanar with the fourth splicing face, or, the second splicing face is parallel to the fourth splicing face, and a distance between the second splicing face and the fourth splicing face is 0.1 mm-10 mm.

6. The stator module according to claim 3, wherein the first direction is an arc direction, and a plane where the first face is located is perpendicular to a plane where the second face is located;
or, the first direction is a linear direction.

7. The stator module according to claim 2, wherein the base has a third side face and a fourth side face disposed opposite to each other in a third direction, the third direction is parallel to the second sub-surface and intersects the first direction, the third side face and the fourth side face are connected with two opposite sides of the first surface, the third side face and the fourth side face are both connected between the first side face and the second side face, inner side walls of the mounting groove have a first groove wall and a second groove wall disposed opposite to each other in the third direction, the first groove wall is disposed close to the third side face, the second groove wall is disposed close to the fourth side face, and a distance from the first groove wall to the third side face is equal to a distance from the second groove wall to the fourth side face.

8. The stator module according to claim 1, further comprising:
a driver, located in the mounting groove and between the armature winding and the bottom surface, and electrically connected with the armature winding.

9. The stator module according to claim 8, wherein the mounting groove comprises:
a first accommodating groove, in which the armature winding being located; and
a second accommodating groove, the first accommodating groove communicating with the second accommodating groove, the second accommodating groove being closer to the bottom surface than the first accommodating groove, a projection of a groove opening of the second accommodating groove on the bottom surface being located in a projection of an inner side wall of the first accommodating groove on the bottom surface, the driver being located in the second accommodating groove.

10. The stator module according to claim 9, wherein the base has a heat dissipation channel, which penetrates through the base, and communicates with the second accommodating groove.

11. The stator module according to claim 9, wherein the base has at least one weight reduction groove.

12. The stator module according to claim 11, wherein the base has at least one socket, which communicates with the second accommodating groove and the weight reduction groove, and an external component is electrically connected with the driver through the socket.

13. The stator module according to claim 1, wherein the armature winding comprises at least two coil groups, each of the coil groups comprises a plurality of coils, all of the coils in a same coil group extend in a same direction and are arranged in sequence in another direction intersecting an extension direction of the coils, and an angle is reserved between extension directions of the coils in every two adjacent coil groups.

14. The stator module according to claim 13, wherein an acute angle between the extension directions of the coils in every two adjacent coil groups is greater than or equal to 15° and smaller than or equal to 75°.

15. The stator module according to claim 13, wherein the plurality of coils in the same coil group are spaced apart, and a distance between every two adjacent coils in the same coil group is equal to a polar distance of any one of the two adjacent coils;
or, at least two adjacent coils in the same coil group are arranged to be in contact with each other.

16. The stator module according to claim 13, wherein every two adjacent coil groups are disposed symmetrically along a straight line parallel to a first direction, and the first direction is parallel to the second sub-surface;
or, the coils in each of the coil groups have a first end portion and a second end portion disposed opposite to each other in an arrangement direction of at least two coil groups, the first end portions of all of the coils in the coil groups are located on one sides of the coil groups, the second end portions of all of the coils in the coil groups are located on the other sides of the coil groups, the first end portions of the coils in one coil group of every two adjacent coil groups are disposed close to the second end portions of the other coil group, the first end portion of each of the coils in one coil group is located along the first direction between the second end portions of the corresponding two adjacent coils of the other coil group, and the first direction is parallel to the second sub-surface.

17. The stator module according to claim 13, wherein each of the coils in the coil groups has a first end portion and a second end portion disposed opposite to each other in an arrangement direction of the at least two coil groups, the first end portions of all of the coils in the coil groups are located on one sides of the coil groups, and the second end portions of all of the coils in the coil groups are located on the other sides of the coil groups,
the first end portions of all of the coils in the same coil group are respectively located on a first straight line, and/or, the second end portions of all of the coils in the same coil group are respectively located on a second straight line.

18. The stator module according to claim 17, wherein the first straight line and the second straight line are respectively parallel to a first direction, and the first direction is parallel to the second sub-surface;
or, the first straight line is parallel to the first direction, the second straight line intersects the first direction, and the first direction is parallel to the second sub-surface.

19. The stator module according to claim 13, wherein part of a projection of the at least two coil groups on the bottom surface is located outside the base.

20. The stator module according to claim 13, wherein the coils in at least one of the coil groups are connected with the coils in the other adjacent coil group in a one-to-one correspondence manner, so that every two connected coils in the two adjacent coil groups are combined to form a zigzag coil.

21. A conveying device, comprising:
a stator module, comprising a base and an armature winding, the base comprising a bottom surface and a first surface facing away from the bottom surface, the first surface comprising a first sub-surface, a second sub-surface and a third sub-surface, the second sub-surface and the first sub-surface being spaced apart in a direction perpendicular to the first sub-surface, a projection of the second sub-surface on the first sub-surface being located on a periphery of the first sub-surface, the third sub-surface being connected between the first sub-surface and the second sub-surface, the first sub-surface, the second sub-surface and the third sub-surface being enclosed to form a mounting groove, the armature winding being located in the mounting groove, a surface of the armature winding facing away from a bottom surface being coplanar with the second sub-surface;
a substrate, comprising a bottom plate and two guide rails connected with the bottom plate, the two guide rails both extending in a first direction and being spaced apart in a third direction, the first direction and the third direction both being respectively parallel to the second sub-surface, the third direction being perpendicular to the first direction, the two guide rails and the bottom plate are enclosed to form an accommodating cavity, the stator module being located in the accommodating cavity, the bottom surface of the base being fixedly connected with the bottom plate; and
a mover module, located on a side of the armature winding away from the bottom plate, the mover module comprising a carrying portion and a permanent magnet array connected with the carrying portion, the carrying portion and the two guide rails being slidably connected in the first direction, the permanent magnet array being located between the carrying portion and the armature winding, and the permanent magnet array being disposed corresponding to the armature winding.

22. The conveying device according to claim 21, wherein a plurality of rolling members are disposed between each of the guide rails and the carrying portion, and the plurality of rolling members are disposed in sequence in the first direction.

23. The conveying device according to claim 22, wherein the carrying portion comprises a middle plate and two side plates connected with two opposite sides of the middle plate, the two side plates are disposed in one-to-one correspondence with the two guide rails of the substrate, and the plurality of rolling members are respectively disposed between each of the guide rails and a corresponding side plate.

24. The conveying device according to claim 23, wherein each of the rolling members comprises a first roller, the first roller is rotatably connected with one of the corresponding side plate and the corresponding guide rail, and the first roller is in lap connection with another of the corresponding side plate and the corresponding guide rail.

25. The conveying device according to claim 24, wherein each of the guide rails is provided with a first limiting portion, each of the side plates is provided with a second limiting portion, and the first limiting portion of each of the guide rails is disposed corresponding to the second limiting portion of the corresponding side plate, wherein the first limiting portion is one of a limiting protrusion and a limiting groove, the second limiting portion is the other of the limiting protrusion and the limiting groove, the limiting protrusion is located in the limiting groove, and the limiting protrusion and/or the limiting groove extends in the first direction.

26. The conveying device according to claim 24, wherein each of the guide rails is staggered with the corresponding side plate in the third direction, an extension plate is disposed on a side, close to the corresponding side plate, of the guide rail, the side plate is rotatably connected with the first roller, and the first roller is in lap connection with the extension plate.

27. The conveying device according to claim 26, wherein each one of the rolling members further comprise a second roller, and the second roller is disposed between the side plates and corresponding guide rails in the third direction and respectively abut against the side plates and the guide rails.

28. The conveying device according to claim 24, wherein a lap surface, in lap connection with one of the side plate and the guide rail, of the first roller is located on a side, facing away from the bottom surface, of the first surface of the base.

29. The conveying device according to claim 21, wherein a carrier roller and a belt are mounted on the guide rails, or a chain and a chain wheel are mounted on the guide rails, so as to drive the mover module to move in the first direction relative to the stator module.
